(19) Europäisches Patentamt / European Patent Office / Office européen des brevets

(11) **EP 2 146 309 A1**

(12) **DEMANDE DE BREVET EUROPEEN**

(43) Date de publication:
**20.01.2010 Bulletin 2010/03**

(51) Int Cl.:
***G06Q 10/00*** *(2006.01)*

(21) Numéro de dépôt: **09165319.6**

(22) Date de dépôt: **13.07.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **16.07.2008 FR 0854824**

(71) Demandeur: **Commissariat à l'Energie Atomique Bâtiment D "Le Ponant"
25 rue Leblanc
75015 Paris (FR)**

(72) Inventeurs:
• **Paulus, Cédric
73490 La Ravoire (FR)**
• **Papillon, Philippe
73000 Chambery (FR)**

(74) Mandataire: **Ilgart, Jean-Christophe
Brevalex
3, rue du Docteur Lancereaux
75008 Paris (FR)**

(54) **Aide au chargement d'une chaudière a combustible solide couplée à un système d'accumulation**

(57) L'invention concerne un procédé d'estimation de l'alimentation en combustible d'une chaudière, pour un bâtiment (2) possédant une chaudière (4) et des moyens (4') d'accumulation d'énergie, afin d'assurer une température intérieure souhaitée pendant une période d'autonomie P, ce procédé comportant les étapes suivantes :
a) réaliser une estimation de la température extérieure moyenne pendant la période d'autonomie P,
b) déterminer la consommation du bâtiment (2) pour assurer ladite température intérieure souhaitée, en fonction de l'estimation précédente de la température extérieure moyenne,
c) déterminer la quantité d'énergie à fournir en fonction de la consommation précédente, et la quantité de combustible nécessaire pour fournir cette énergie.

FIG.3

EP 2 146 309 A1

**Description**

## DOMAINE TECHNIQUE ET ART ANTÉRIEUR

L'invention concerne le domaine des dispositifs de régulation des chaudières, en particulier les chaudières à combustible solide tel que le bois, ou le charbon. Elle peut également s'appliquer en tant que dispositif de régulation de ballons de stockage.

La régulation d'une chaudière est une opération complexe, car faisant intervenir de nombreux paramètres.

Le chauffage par combustible solide, présente de nombreuses contraintes pour obtenir une bonne combustion, synonyme de rendement optimal, d'émissions minimales de polluants et de longévité de la chaudière accrue.

L'alimentation en combustible de la chaudière se fait manuellement, et la quantité de combustible chargée dans le foyer est le plus souvent brûlée à puissance nominale. Les besoins de chauffage et d'eau chaude sanitaire n'étant pas forcément en adéquation avec l'énergie disponible par la chaudière, il est conseillé de coupler cet appareil à un ballon tampon qui permet de stocker l'énergie non consommée pour la restituer ultérieurement.

Un nouveau chargement en combustible de la chaudière est opéré lorsque l'énergie hydro accumulée n'est plus suffisante: on cherche à faire correspondre la quantité de bois chargée aux besoins et à la quantité maximum d'énergie que peut accumuler le ballon tampon.

Actuellement, la quantité de combustible à charger dans la chaudière et sa fréquence sont estimés par l'utilisateur à partir de son ressenti des besoins de chauffage, en fonction de son expérience et des conditions climatiques, mais aussi à partir d'une estimation de l'énergie restante dans le ballon tampon.

Mais les besoins de chauffage et d'eau chaude sanitaire varient au cours de l'année, d'une maison par rapport à une autre et d'un site par rapport à un autre, et l'utilisateur ne peut pas forcément savoir quel va être son besoin sur les prochaines heures. De plus le stock d'énergie accumulée est variable et difficilement estimable par l'utilisateur. De ce fait, il lui est difficile d'alimenter correctement sa chaudière à combustible solide.

Il se pose donc le problème de trouver un procédé et un dispositif permettant de déterminer l'alimentation en combustible solide d'une chaudière, en fonction de paramètres objectifs.

## EXPOSÉ DE L'INVENTION

L'invention concerne notamment un procédé et un dispositif qui permettent d'optimiser le chargement d'une chaudière à combustible solide, en particulier du type couplée à un système d'accumulation.

Elle concerne d'abord un procédé d'estimation de l'alimentation en combustible d'une chaudière, pour un bâtiment possédant une chaudière et des moyens d'accumulation d'énergie, afin d'assurer une température souhaitée, à l'intérieur du bâtiment, pendant une période P, par exemple une période d'autonomie P, ce procédé comportant les étapes suivantes:

> a) réaliser une estimation de la température moyenne, extérieure au bâtiment, pendant la période P,
> b) déterminer la consommation du bâtiment pour assurer ladite température intérieure souhaitée, en fonction de l'estimation précédente de la température extérieure moyenne,
> c) déterminer la quantité d'énergie à fournir en fonction de la consommation précédente, et la quantité de combustible nécessaire pour fournir cette énergie.

Selon l'invention, on estime à l'avance la température extérieure, moyenne et éventuellement instantanée, qu'il fera au cours de la période P. Puis on estime la consommation du bâtiment, moyenne et éventuellement instantanée, pour assurer la température intérieure souhaitée, compte tenu de la température extérieure estimée. On en déduit la quantité d'énergie à fournir, et la quantité de combustible nécessaire pour fournir cette énergie.

Selon un mode de réalisation, l'étape a) met en oeuvre une mesure d'une température extérieure instantanée et/ou réalisée au cours d'une période antérieure à la période P, par exemple elle aussi de durée $\Delta t$.

Selon un autre aspect de l'invention, l'étape b) met en oeuvre une détermination d'une caractéristique du bâtiment, dite signature énergétique, qui représente la consommation du bâtiment en fonction de la différence entre une température intérieure $T_{int}$ et une température extérieure $T_{ext}$.

Il est éventuellement possible de comparer, pour une période antérieure à la période P, le besoin de chauffage estimé et le besoin de chauffage réel. On peut corriger la signature énergétique en fonction du résultat de cette comparaison.

L'étape de détermination de la quantité d'énergie à fournir, et de la consommation de combustible nécessaire, peut résulter de la prise en compte de paramètres tels que température intérieure, et/ou facteurs de déperdition, et/ou énergie consommée pendant la durée concernée et/ou énergie déjà stockée dans le système d'accumulation.

Il est donc par exemple possible, au cours de l'étape c), de prendre au moins en compte:

- l'autonomie de chauffage au début de la période P,
- la quantité maximum d'énergie stockable dans les moyens d'accumulation,
- la quantité minimum d'énergie chargeable dans la chaudière,
- et la quantité maximum d'énergie chargeable dans la chaudière.

Selon un mode de réalisation, la quantité d'énergie à charger est égale à la plus petite des deux quantités suivantes:

- la différence entre l'énergie maximum stockable dans les moyens d'accumulation et l'énergie disponible dans les moyens d'accumulation,
- l'énergie maximum chargeable dans la chaudière,

et ce tout en étant supérieure à l'énergie minimum chargeable dans la chaudière.

L'invention permet notamment d'indiquer à un utilisateur les informations nécessaires au bon chargement de la chaudière pour assurer les besoins énergétiques des prochaines heures ou de la période d'autonomie P, notamment les informations suivantes:

- l'énergie restante dans les moyens d'accumulation,
- l'énergie à charger dans la chaudière,
- l'autonomie de chauffage.

Dans un procédé selon l'invention, il est possible de réaliser en outre une estimation d'au moins une température extérieure instantanée pendant la période P. A partir de là, il est possible d'estimer une répartition horaire des besoins de chauffage pendant cette période P. On peut notamment réaliser un calcul de la consommation du bâtiment pour une pluralité d'instant pendant la période P $\Delta$t.

Un utilisateur peut, après un procédé selon l'invention, charger la chaudière avec la quantité de combustible obtenue par le procédé selon l'invention.

L'invention peut être mise en oeuvre à l'aide de moyens numériques de traitement de données, par exemple un ordinateur ou un microordinateur.

L'invention concerne également un dispositif d'estimation de l'alimentation en combustible d'une chaudière possédant des moyens d'accumulation, pour un bâtiment, comportant:

a) des moyens pour déterminer la consommation du bâtiment pour assurer une température, intérieure au bâtiment, souhaitée pendant une période P, par exemple une période d'autonomie P, à partir d'une estimation d'une température, extérieure au bâtiment, moyenne pendant la période P,

b) des moyens pour déterminer la quantité d'énergie à fournir en fonction de la consommation précédente, et la quantité de combustible nécessaire pour fournir cette énergie. De tels moyens mettent en oeuvre un procédé tel que décrit ci-dessus.

Un système de chauffage d'un bâtiment, comporte, selon l'invention:

- une chaudière pour effectuer la combustion d'un combustible, et des moyens d'accumulation d'énergie,
- un dispositif, tel que décrit ci-dessus, d'estimation de l'alimentation en combustible de la chaudière.

Un tel système de chauffage peut comporter en outre des moyens pour mesurer au moins une température extérieure au bâtiment et au moins une température intérieure.

Un tel système peut en outre comporter des moyens de mesure de la quantité d'énergie disponible dans les moyens d'accumulation.

L'invention concerne également un bâtiment, possédant un système de chauffage selon l'invention, tel que décrit ci-dessus, et des moyens de chauffage.

**BRÈVE DESCRIPTION DES DESSINS**

- La figure 1 est un organigramme d'un procédé, selon l'invention, d'aide au chargement en combustible solide de la chaudière,
- la figure 2 est un organigramme d'un autre procédé, selon l'invention, d'aide au chargement en combustible solide de la chaudière,
- la figure 3 représente un bâtiment équipé d'une chaudière régulée par un procédé et un dispositif selon l'invention.

**EXPOSÉ DÉTAILLÉ DE MODES DE RÉALISATION PARTICULIERS**

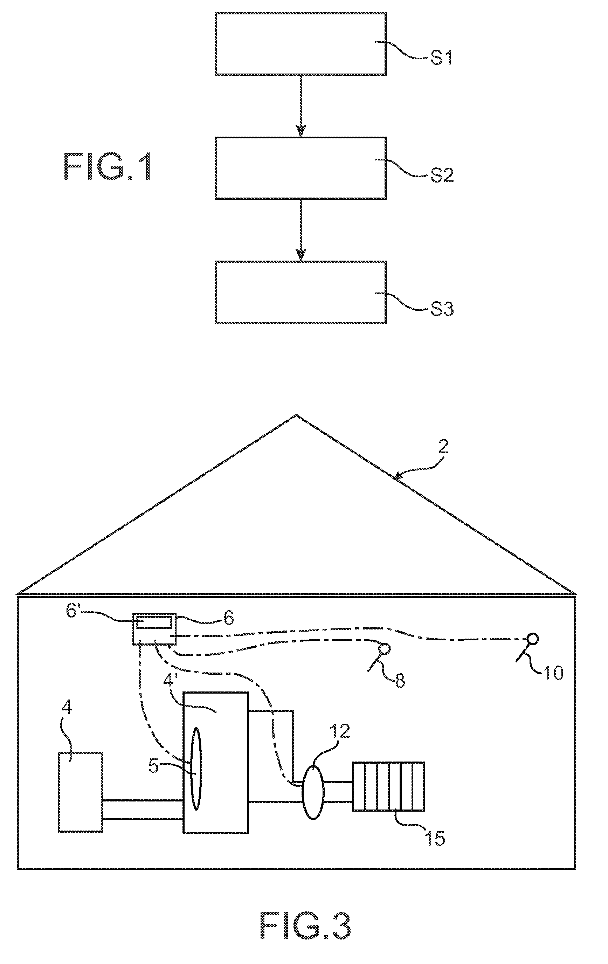

L'invention s'applique à un bâtiment 2 (figure 3) comportant une chaudière 4. Celle-ci est associée ou reliée à des moyens 4' d'accumulation, qui ont par exemple la forme d'un ballon d'eau chauffée. Un fluide contenu dans ces moyens d'accumulation va pouvoir être utilisé pour être envoyé à des moyens 15 de chauffage de l'intérieur du bâtiment. La chaudière permet de chauffer le fluide (par exemple de l'eau) contenu dans les moyens 4' d'accumulation.

On cherche à réguler un tel système afin d'assurer une certaine température pendant une certaine durée ou période, par exemple une durée ou période d'autonomie $\Delta t$. Une période ou durée d'autonomie peut être une durée pendant laquelle le système doit fonctionner sans intervention humaine et en particulier sans chargement additionnel de combustible. Par la suite, cette durée d'autonomie sera le plus souvent considérée comme étant égal à 24 heures, ou à une journée, mais elle peut être d'une valeur différente.

Le bâtiment peut être un bâtiment d'habitation, par exemple une maison ou un appartement, mais aussi tout autre type de bâtiment, par exemple un bâtiment utilitaire tel qu'une usine ou un entrepôt ou une unité de production ou un bâtiment de bureaux.

Comme on le voit encore sur la figure 3, le bâtiment 2 est équipé de moyens 8, 10 de mesure de la température intérieure, et de la température extérieure.

Il comporte en outre:

- un appareil ou des moyens 6 d'acquisition et de calcul ou de traitement de données,
- des moyens 5 de mesure de l'énergie stockée dans les moyens 4 d'accumulation,
- des moyens 12 de mesure de l'énergie de chauffage.

La référence 15 désigne des moyens de chauffage du bâtiment 2.

Les moyens 8, 10 de mesure de température sont représentés sur la figure 3 comme directement reliés à l'appareil 6 d'acquisition, mais les données de température peuvent aussi être fournies à cet appareil 6 par l'intermédiaire d'un autre appareil d'acquisition séparé qui collecte lui-même les données de température à partir des capteurs 8, 10.

L'appareil d'acquisition 6, de calcul ou de traitement, récupère donc, directement ou indirectement, toutes les mesures, effectue les estimations et affiche les résultats d'aide au chargement.

Il peut être équipé d'un microprocesseur. Il peut s'agir d'un micro-ordinateur. L'appareil ou les moyens 6 est/ sont en tout cas programmé(s) pour exécuter un procédé selon l'invention, d'estimation de l'alimentation nécessaire au système de chauffage en vue de maintenir une température souhaitée, ou de faire effectuer un cycle de température souhaitée dans l'intérieur du bâtiment. Cet appareil va notamment effectuer des calculs de température extérieure, moyenne ou instantanée, et de consommation du bâtiment, en vue d'assurer le chauffage ou le cycle de chauffage souhaité.

De préférence, il est muni de moyens d'indication 6' en vue de la présentation, à un utilisateur, de certains résultats de calculs ou d'estimations, en particulier de la quantité finale de combustible qui doit être fournie au système de chauffage.

Des étapes d'un procédé selon l'invention sont décrites ci-dessous.

Un premier procédé selon l'invention est représenté de manière schématique sur la figure 1.

Dans une première étape, S1, on estime une température moyenne extérieure au cours de la période pendant laquelle on souhaite chauffer, de manière autonome, le bâtiment. Il est également possible, au cours de cette étape d'estimation, d'estimer des températures extérieures instantanées.

Dans une deuxième étape, S2, on va chercher à déterminer la consommation du bâtiment pour assurer une température intérieure souhaitée pendant une durée d'autonomie $\Delta t$. A cette fin, on peut utiliser une fonction, que l'on pourra avoir préalablement déterminée, et qui relie la consommation du bâtiment en fonction de la température extérieure, moyenne ou instantanée, ou d'une estimation de cette température extérieure, moyenne ou instantanée, ou de la différence $\Delta T$ entre cette température extérieure et la température intérieure.

Cette fonction peut être appelée « signature énergétique » et est notée $B_{chauffage}$. Elle peut s'exprimer sous une forme polynômiale, telle que:

$$a\ (\Delta T)^2 + b\ (\Delta T) + c,$$

les coefficients a, b, c pouvant par exemple être déterminés à partir des mesures de températures et des besoins en chauffage du bâtiment lors des jours précédents.

On cherche ensuite (étape S3) à déterminer la quantité d'énergie à fournir en fonction de la consommation précédente, et la quantité de combustible nécessaire pour fournir cette énergie.

Lors de cette étape on peut prendre en compte divers paramètres, tels que l'autonomie de chauffage au début de la durée d'autonomie Δt, la quantité maximum d'énergie stockable dans le dispositif d'accumulation, la quantité minimum d'énergie chargeable dans le système de chauffage et la quantité maximum d'énergie chargeable dans le système de chauffage.

De préférence, la quantité d'énergie à charger est égale à la plus petite des deux quantités suivantes:

- la différence entre l'énergie maximum stockable dans le système d'accumulation et l'énergie disponible dans le système d'accumulation,
- l'énergie maximum chargeable dans la chaudière,

et ce tout en étant supérieure à l'énergie minimum chargeable dans la chaudière.

Cette quantité d'énergie étant déterminée, ainsi que la quantité de combustible correspondante, il est possible d'alimenter le système de chauffage avec ladite quantité de combustible.

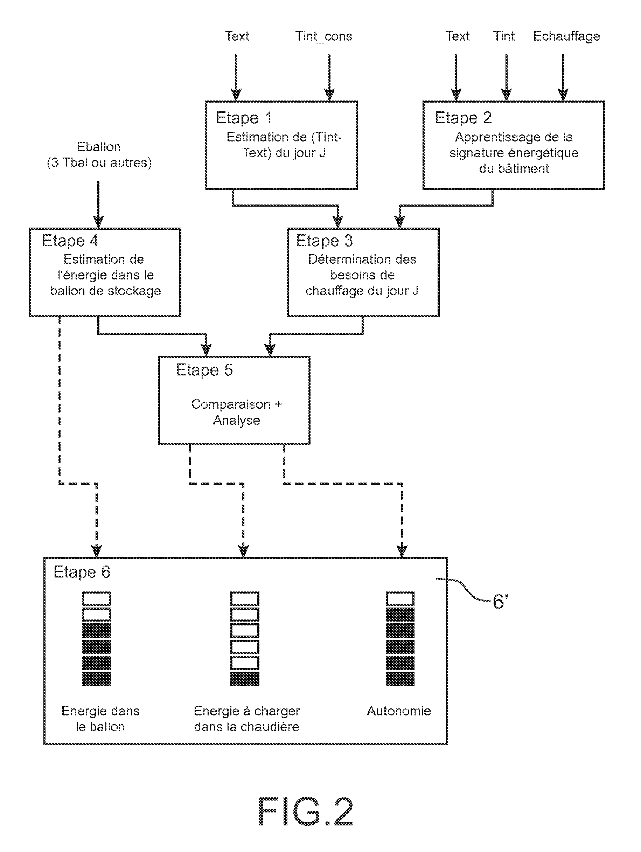

Un mode de réalisation plus particulier d'un procédé sur l'invention va maintenant être décrit. Ce mode de réalisation comporte 6 étapes qui vont être détaillées ci-dessous. A son tour, chacune de ces étapes est séparée en sous étapes, afin de faciliter la compréhension des explications. Ce mode de réalisation est illustré sur la figure 2, organisée de manière différente de la figure 1 ; la numérotation des étapes S1 - S4 mentionnées ci-dessus ne correspond pas nécessairement à la numérotation des étapes de ce mode de réalisation.

Etape 1 :

On considère pour simplifier une période P glissante de 24 heures. P représente les 24 prochaines heures et la période P-1, les 24 dernières heures. Mais ce mode de réalisation pourrait être mis en oeuvre pour une période P de durée quelconque, pas seulement de durée 24 h.

Au cours de la première étape, on va estimer des températures moyennes, et éventuellement instantanées, extérieure et intérieure, et une différence entre ces températures extérieure et intérieure.

*(1.1) Estimation de la température extérieure moyenne de la période P :*

la température extérieure moyenne de la période P peut, par exemple, être estimée:

A) en fonction de la température extérieure maximale de la période P-1, et de la température extérieure mesurée à l'instant de l'estimation, par exemple sous la forme d'une moyenne de ces deux températures ;

B) ou en fonction de la température extérieure mesurée à l'instant de l'estimation, par exemple en milieu de matinée ; par exemple, on considère que la température extérieure moyenne de la période P est égale à une telle température extérieure mesurée ;

C) ou en fonction de la température extérieure minimale de la période P-1, et de la température extérieure mesurée à l'instant de l'estimation, par exemple sous la forme d'une moyenne de ces deux températures.

Il est possible de réaliser une estimation de la température extérieure moyenne d'abord uniquement en fonction des données de la période P-1, puis de corriger en fonction de données de la période P.

Ainsi, par exemple, il est 6h du matin, la température extérieure moyenne de la période P peut se calculer de la façon suivante:

$$T_{ext\_moy\_P} = \frac{T_{ext\_mesurée\_6h} + T_{ext\_max\_P-1}}{2} \qquad \text{(formule A)}$$

En revanche si la mesure d'estimation se fait à un autre horaire, il peut être intéressant d'utiliser les autres formules.

Par exemple:

- à 10h**:**

$$T_{ext\_moy\_P} = T_{ext\_mesurée\_10h} \qquad \text{(formule B)}$$

- à 15h:

$$T_{ext\_moy\_P} = \frac{T_{ext\_min\_P-1} + T_{ext\_mesurée\_15h}}{2} \qquad \text{(formule C)}$$

- 22 h:

$$T_{ext\_moy\_P} = T_{ext\_mesurée\_22h} \qquad \text{(formule B)}$$

Il est également possible d'estimer les températures extérieures, minimales et maximales, de la période P (par exemple les 24 prochaines heures), par exemple à différentes heures de la journée:

a) pour la température extérieure minimale :

- en fonction de la température extérieure minimale de la période P-1, à laquelle elle peut être égale ;
- en fonction de la température extérieure moyenne estimée pour la période P (voir estimations ci-dessus) et d'une température extérieure de la période P-1; par exemple, on considère que la température extérieure minimale de la période P est égale à 2 fois la température extérieure estimée moyenne de la période P diminuée de la température extérieure maximale de la période P-1 ;

b) pour la température extérieure maximum:

- en fonction de la température extérieure maximum de la période P-1, à laquelle elle peut être égale ;
- en fonction de la température extérieure moyenne estimée de la période P (voir estimations ci-dessus) et une température extérieure de la période P-1 ; par exemple, on considère que la température extérieure maximale de la période P est égale à 2 fois la température extérieure moyenne estimée diminuée de la température extérieure minimale de la période P-1 ou de la température extérieure de la période P-1 à une heure déterminée par exemple 6 h du matin.

Selon quelques exemples:

- à 6h : $T_{ext-min-P} = T_{ext-mes-6h}$ et $T_{ext\_max\_P} = 2 \times T_{ext\_moy\_P} - T_{ext\_mes\_6h}$
- à 10h : $T_{ext\_min\_P} = T_{ext\_min\_P-1}$ et $T_{ext\_max\_P} = 2 \times T_{ext\_moy\_P} - T_{ext\_min\_P-1}$
- à 15h : $T_{ext\_min\_P} = T_{ext\_min\_P-1}$ et $T_{ext\_max\_P} = T_{ext\_mes\_15h}$
- à 22h : $T_{ext\_min\_P} = 2 \times T_{ext\_moy\_P} - T_{ext\_max\_P-1}$ et $T_{ext\_max\_P} = T_{ext\_max\_P-1}$

Connaissant la température extérieure moyenne estimée de la période P, il est possible d'estimer un profil horaire de la température extérieure de la période P, par exemple par la fonction sinus suivante:

$$T_{ext\_H\_P} = \frac{T_{ext\_min\_p} + T_{ext\_max\_p}}{2} + \frac{T_{ext\_min\_p} - T_{ext\_max\_p}}{2} \times \sin\left(\frac{(H + Ho) - 9}{12} \times \pi\right)$$

Avec:

- $T_{ext\_H\_P}$ : la température extérieure estimée pour la période P, à l'instant H ;
- $T_{ext\_min\_P}$ : la température extérieure estimée minimale pour la période P;

- $T_{ext\_max\_P}$ : la température extérieure maximum pour la période P;
- H : l'instant parmi les 24 heures de la période P pour laquelle la température extérieure est estimée ;
- Ho : l'heure réelle de la journée à laquelle est faite l'estimation.

*(1.2) Estimation de la température intérieure de la période P :*

La température intérieure moyenne de la période P peut être calculée en fonction de la température intérieure moyenne d'un ou de plusieurs jours précédents, à partir des expressions suivantes :

- $T_{int\_moy\_P} = T_{int\_moy\_P-1}$ si un profil constant a été détecté ;
- ou $T_{int\_moy\_P} = T_{int\_moy\_P-7}$ si un profil hebdomadaire a été détecté.

La température intérieure moyenne de la période P peut également être calculée en fonction d'une consigne de température programmée par l'utilisateur.

Le profil horaire de la température intérieure est soit déterminé en fonction des profils des jours précédents, soit selon une consigne de température intérieure horaire programmée par l'utilisateur.

*(1.3) Estimation de la différence entre la température intérieure moyenne de la période P et la température extérieure moyenne de la période P :*

Une estimation de la différence entre la température intérieure moyenne de la période P et la température extérieure moyenne de la période P peut être réalisée à partir de la soustraction entre une estimation de la température intérieure moyenne de la période P et une estimation de la température extérieure moyenne de la période P.

Une estimation horaire de la différence entre la température intérieure horaire de la période P et la température extérieure horaire de la période P peut être réalisée à partir de la soustraction entre une estimation de la température intérieure horaire de la période P et une estimation de la température extérieure horaire de la période P.

<u>Etape 2</u> :

*2.1) Définition de la signature énergétique d'un bâtiment :*

Chaque bâtiment possède une signature énergétique qui représente la consommation du bâtiment en fonction de la température extérieure ou en fonction de la différence entre la température intérieure et la température extérieure. Elle peut s'écrire sous la forme de l'équation suivante:

$$B_{chauffage} = a \times (T_{int} - T_{ext})^2 + b \times (T_{int} - T_{ext}) + c = \vartheta^T.\Phi$$

Où on a les deux matrices (1 x 3) :

$$\vartheta = \begin{bmatrix} a & b & c \end{bmatrix}$$

$$\Phi = \begin{bmatrix} (T_{int} - T_{ext})^2 & (T_{int} - T_{ext}) & 1 \end{bmatrix}$$

En fait il s'agit là d'un polynôme du deuxième degré fonction de $(T_{int} - T_{ext})$.

A partir des mesures de la température extérieure, de la température intérieure et du besoin de chauffage du bâtiment des périodes précédentes, la méthodologie développée permet de caler la signature énergétique du bâtiment avec les données réelles.

Cette formule de $B_{chauffage}$ peut être appliquée aussi bien aux valeurs moyennes des températures extérieures et intérieures déterminées précédemment, pour déterminer les besoins de chauffage moyens de la période P, qu'aux valeurs instantanées des températures extérieures et intérieures, pour déterminer la répartition horaire des besoins de chauffage de la période P.

*2.2) Ajustement des paramètres de la signature énergétique du bâtiment par une méthode en ligne :*

Chaque jour, la température extérieure moyenne et la température intérieure moyenne peuvent être mesurées ou estimées, ce qui permet de prédire le besoin de chauffage.

Le besoin de chauffage réel qui représente l'énergie dissipée par le circuit de chauffage dans le bâtiment est mesuré, par exemple, à partir d'un compteur d'énergie situé sur le circuit de chauffage.

Le besoin de chauffage estimé (la signature énergétique) est comparé au besoin de chauffage réel mesuré pour la même période (il s'agit donc des besoins estimés et mesurés d'une période écoulée). En fonction du résultat de cette comparaison le système 6 peut ajuster automatiquement les paramètres du modèle, de préférence en temps réel et sans nécessiter un traitement hors-ligne des informations

Par exemple, l'algorithme suivant peut être utilisé pour ajuster les paramètres a, b et c :

$$\vartheta(t) = \vartheta(t-1) + K(t).e(t)$$

La variable t représente les jours.

Les matrices e et K représentent respectivement l'erreur a priori entre le besoin de chauffage mesuré et le besoin de chauffage estimé, et le gain d'adaptation à appliquer pour tenir compte de cette erreur. Ces deux matrices se calculent de la façon suivante :

- erreur a priori : $e(t) = B_{chauffage}(t) - \Phi^T(t).\vartheta(t\text{-}1)$

- gain d'adaptation : $$K(t) = \frac{P(t-1).\Phi(t)}{\frac{\lambda}{\mu} + \vartheta^T(t).P(t-1).\vartheta(t)}$$

La matrice P est calculée et réactualisée de la façon suivante :

$$- \quad P(t) = \frac{1}{\lambda}\left( P(t-1) - \frac{P(t-1).\Phi(t).\Phi^T(t).P(t)}{\frac{\lambda}{\mu} + \vartheta^T(t).P(t-1).\vartheta(t)} \right)$$

Le coefficient $\lambda$ est un facteur d'oubli et le coefficient $\mu$ est un facteur de pondération.

Les équations de cet algorithme sont censées permettent de déterminer a, b et c. En général il y a à résoudre un système de 3 équations à 3 inconnues.

Le réajustement des paramètres de la signature énergétique peut avoir lieu à des instants prédéterminés, par exemple toutes les 24 heures à l'heure 0.

La méthodologie de détermination de la signature du bâtiment est auto-adaptative ce qui permet de prendre en compte automatiquement les évolutions futures du bâtiment. En effet, la signature se corrige régulièrement par réajustement des paramètres. Elle prendra donc en compte, par exemple, une extension du bâtiment, une amélioration de l'isolation, ....

Etape 3 :

*(3.1) Estimation des besoins de chauffage journalier de la période P:*

A partir de la fonction $B_{chauffage}$ représentative de la signature énergétique déterminée à l'étape 2 et de l'estimation de la différence entre la température intérieure moyenne et la température extérieure moyenne estimée de la période P à l'étape 1, les besoins de chauffage journalier de la période P sont déterminés. Ils sont calculés à partir de l'équation suivante :

$$B_{chauffage\_P} = a \times (T_{int\_moy\_P} - T_{ext\_moy\_P})^2 + b \times (T_{int\_moy\_P} - T_{ext\_moy\_P}) + c$$

*(3.2) Estimation de la répartition horaire des besoins de chauffage journalier de la période P:*

La répartition horaire des besoins de chauffage de la période P est calculée à partir de la différence horaire entre la température intérieure et la température extérieure estimée de la période P et de la courbe représentative de la signature énergétique du bâtiment de la façon suivante :

$$B_{chauffage\_H\_P} = \frac{a \times (T_{int\_H\_P} - T_{ext\_H\_P})^2 + b \times (T_{int\_H\_P} - T_{ext\_H\_P}) + c}{24}$$

Cette quantité B$_{chauffage}$ est un besoin de chauffage qui peut évoluer en fonction de H. Cette information est utile pour gérer le stock d'énergie disponible dans les moyens d'accumulation.
Les besoins de chauffage sont ainsi connus sur les 24 prochaines heures.

Etape 4 :

*Estimation de l'énergie utilisable disponible dans le système d'accumulation :*

Au cours de cette étape on peut estimer l'énergie utilisable disponible dans les moyens d'accumulation 4' (figure 3) au début de la période P sur laquelle les besoins sont à déterminer. Cette information peut provenir d'un appareil spécifique au type de stockage ou de mesures réalisées sur ce système d'accumulation.
Si le système d'accumulation 4' est un ballon d'hydro-accumulation, l'énergie utilisable disponible peut être estimée à partir de la mesure de la température moyenne du stockage de l'eau et du volume du dispositif de stockage.
Le volume du système d'accumulation pourra préalablement avoir été paramétré par l'utilisateur.
La température moyenne du ballon de stockage 4' peut être estimée, par exemple à partir de la moyenne de plusieurs sondes de température situées dans le ballon, par exemple 3 sondes, l'une à 1/6 du ballon, une à la moitié du ballon et une à 5/6 du ballon.

Etape 5 :

Dans une cinquième étape on compare et on analyse les informations issues des étapes 3 (détermination des besoins en énergie) et 4 (estimation de l'énergie utilisable disponible en début de période) dans le but de déterminer l'autonomie de chauffage avec l'énergie disponible actuellement dans le système d'accumulation, et éventuellement la quantité d'énergie à charger dans la chaudière à combustible solide.

*(5.1) Estimation de l'autonomie de chauffage :*

L'autonomie de chauffage représente le nombre d'heures pendant lesquels l'énergie disponible dans le système d'accumulation permet de satisfaire les besoins de chauffage. Connaissant les besoins horaires de chauffage pendant la période P, et l'énergie disponible dans le système d'accumulation, cette valeur est aisément calculable, par différence.

*(5.2) Estimation de la quantité d'énergie à charger dans la chaudière :*

La quantité d'énergie à charger dans la chaudière est calculée à partir :

- de l'autonomie de chauffage ;
- de la quantité maximum d'énergie stockable dans le système d'accumulation ;
- et des quantités minimum et maximum d'énergie chargeables dans la chaudière. La quantité minimum d'énergie « chargeable » dans la chaudière, peut-être égale à 0, mais il faut parfois un minimum non nul pour faire démarrer la chaudière.

Si l'autonomie de chauffage est supérieure à l'autonomie minimum souhaitée par l'utilisateur, par exemple 8h, alors le système peut assurer son autonomie jusqu'à la prochaine présence de l'utilisateur et l'énergie à charger dans la chaudière peut être nulle.

Si l'autonomie de chauffage est inférieure à l'autonomie minimum souhaitée, alors la quantité d'énergie à charger dans la chaudière est calculée de la façon suivante.

On calcule tout d'abord les paramètres qui définissent les bornes de quantité d'énergie à charger dans la chaudière :

- l'énergie maximum stockable dans le système d'accumulation 4' est un paramètre renseigné par l'utilisateur. Si le dispositif de stockage est un ballon d'hydro-accumulation, l'énergie maximum stockable est calculée à partir du volume $V_{ballon}$ du ballon, de la température maximum de stockage et de la température minimum utilisable dans le système de chauffage:

$$E_{stockage\_\max i} = V_{ballon} \times C_p \times (T_{bal\_\max} - T_{bal\_\min})$$

où $C_p$ est la capacité calorifique du liquide,

- l'énergie maximum chargeable dans la chaudière correspond à la quantité d'énergie que représente un chargement complet en combustible du foyer de la chaudière. Cette énergie se calcule à partir de caractéristiques géométriques de la chaudière (volume du foyer $V_{foyer}$), du type de chaudière et du type de combustible (par le facteur $\rho_{chaudière}$, donné par le fabricant). La formule suivante peut être utilisée :

$$E_{chaudière\_\max i} = V_{foyer} \times \rho_{chaudière} \times PCI_{combustible}$$

(le PCI est le pouvoir calorifique inférieur, également donné par le fabricant),

- l'énergie minimum chargeable dans la chaudière 4 à combustible correspond à un paramètre renseigné par l'utilisateur qui correspond à une donnée du constructeur de chaudière dépendant du type de celle-ci. Dans la plupart des cas, la charge minimum est égale à 50 % de la charge maximum.

La quantité d'énergie à charger dans la chaudière 4 est alors égale au minimum entre :

- d'une part la différence entre l'énergie maximum stockable dans le système d'accumulation et l'énergie disponible dans le système d'accumulation,
- et d'autre part l'énergie maximum chargeable dans la chaudière.

De plus la quantité d'énergie à charger dans la chaudière ne peut être inférieure à l'énergie minimum chargeable dans la chaudière. Ceci peut être représenté par l'équation suivante :

$$E_{chaudière\_à\_charger} = \max\left(E_{chaudière\_\min i}; \min\left(\left(E_{stockage\_\max i} - E_{stockage\_dispo}\right), E_{chaudière\_\max i}\right)\right)$$

Dans le cas du manque d'énergie stockée, on charge la chaudière au maximum pour remplir le ballon au maximum.

Etape 6 :

Des informations sont fournies à l'utilisateur pour le bon chargement de sa chaudière à combustible solide, par exemple:

- l'énergie disponible dans le ballon (calculée à l'étape 4),
- l'autonomie de chauffage (calculée à l'étape 5),
- l'énergie à charger dans la chaudière (calculée à l'étape 5).

Ces informations sont transmises à l'utilisateur par exemple par des moyens tels que des moyens de visualisation ou un afficheur.

Un procédé et un dispositif selon l'invention permettent donc à un utilisateur de charger correctement sa chaudière à combustible solide grâce à l'information relative à :

- l'énergie restante dans le système d'accumulation,
- l'énergie à charger dans la chaudière,
- l'autonomie de chauffage.

Un dispositif selon l'invention, installé dans un bâtiment 2, est représenté en figure 2.
Des exemples d'applications d'un procédé selon l'invention vont maintenant être donnés.

Exemple 1 : Estimation de l'énergie à charger dans la chaudière :

Dans cet exemple on considère une période P de 24 heures (qui ne commence pas nécessairement à 0h).
L'appareil d'aide au chargement est installé sur un système 4, 4' de chauffage constitué d'une chaudière 4 à bois et/ou bûches de 25 kW avec un foyer de 50 1 et d'un ballon 4' de stockage en eau de 1000 1. L'utilisateur a réglé la consigne de la température ambiante à 20°C.
L'utilisateur a réglé le système avec les paramètres suivantes :

- Température consigne intérieure : 20°C constante,
- Volume du foyer de la chaudière 4: 50 litres,
- Volume du ballon 4' de stockage : 1000 litres,
- Type d'émetteurs 15: radiateurs,
- Autonomie minimum souhaitée : 8h.

Les valeurs mesurées le jour précédent sont :

- température moyenne : 10°C
- température maximum : 15°C
- température minimum : 5°C

Il est 6 h du matin, et la température extérieure mesurée est alors de 7°C.
Les étapes 1-6 vont être maintenant appliquées.

Etape 1 :

*(1.1) Estimation* de *la température extérieure moyenne* de *la période P:*

Le système 6 estime la température extérieure moyenne de la période P, au cours des 24 prochaines heures dans cet exemple :

$$T_{ext\_moy\_P} = \frac{T_{ext\_mesurée\_6h} + T_{ext\_max\_P-1}}{2} = \frac{7+15}{2} = 11°C$$

Les températures minimum et maximum sur les 24 prochaines heures sont estimées de la manière suivante:

$$T_{ext\_min\_P} = T_{ext\_mes\_6h} = 7°C$$

et

$$T_{ext\_max\_P} = 2 \times T_{ext\_moy\_P} - T_{ext\_mes\_6h} = 2 \times 11 - 7 = 15°C$$

Le système 6 estime ensuite le profil horaire de la température extérieure des 24 prochaines heures.

*(1.2) Estimation de la température intérieure moyenne de la période P:*

La température intérieure de consigne est de 20°C constant sur la période P.

*(1.3) Estimation de la différence entre la température intérieure moyenne de la période P et la température extérieure moyenne de la période P:*

Le système 6 calcule ensuite la différence entre la température extérieure horaire et la température intérieure de consigne de la période P (les 24 prochaines heures dans l'exemple choisi).

Les valeurs de ces températures sont détaillées dans le tableau ci-dessous :

| Heure de la journée [h] | Ecart entre l'heure actuelle et l'heure de l'estimation [h] | Température extérieure estimée à l'heure h [°C] | Température intérieure de consigne à l'heure h [°C] | Différence : Température intérieure - température extérieure [°C], à l'heure h |
|---|---|---|---|---|
| 7 | 1 | 9.0 | 20 | 11.0 |
| 8 | 2 | 10.0 | 20 | 10.0 |
| 9 | 3 | 11.0 | 20 | 9.0 |
| 10 | 4 | 12.0 | 20 | 8.0 |
| 11 | 5 | 13.0 | 20 | 7.0 |
| 12 | 6 | 13.8 | 20 | 6.2 |
| 13 | 7 | 14.5 | 20 | 5.5 |
| 14 | 8 | 14.9 | 20 | 5.1 |
| 15 | 9 | 15.0 | 20 | 5.0 |
| 16 | 10 | 14.9 | 20 | 5.1 |
| 17 | 11 | 14.5 | 20 | 5.5 |
| 18 | 12 | 13.8 | 20 | 6.2 |
| 19 | 13 | 13.0 | 20 | 7.0 |
| 20 | 14 | 12.0 | 20 | 8.0 |
| 21 | 15 | 11.0 | 20 | 9.0 |
| 22 | 16 | 10.0 | 20 | 10.0 |
| 23 | 17 | 9.0 | 20 | 11.0 |
| 24 | 18 | 8.2 | 20 | 11.8 |
| 1 | 19 | 7.5 | 20 | 12.5 |
| 2 | 20 | 7.1 | 20 | 12.9 |
| 3 | 21 | 7.0 | 20 | 13.0 |
| 4 | 22 | 7.1 | 20 | 12.9 |
| 5 | 23 | 7.5 | 20 | 12.5 |
| 6 | 24 | 8.2 | 20 | 11.8 |

Etape 2 :

*(2.1) Définition de la signature énergétique :*

Les mesures des températures extérieures, des températures intérieures et des besoins de chauffage des périodes précédentes ont permis de déterminer la signature énergétique du bâtiment :

$$B_{chauffage} = a \times (T_{int} - T_{ext})^2 + b \times (T_{int} - T_{ext}) + c \quad [\text{kWh}].$$

Avec : a = 0 ; b = 6,28 ; c = -29, 56.

*(2.2) Ajustement des paramètres de la signature énergétique du bâtiment :*

Le réajustement de ces paramètres peut avoir lieu à des instants prédéterminés, par exemple toutes les 24 heures, à une heure définie comme étant l'heure 0.

Etape 3 :

*(3.1) Estimation des besoins de chauffage journalier de la période P:*

Les besoins de chauffage estimés pour les 24 prochaines heures sont de :

$$B_{chauffage\_P} = a \times (T_{int\_moy\_P} - T_{ext\_moy\_P})^2 + b \times (T_{int\_moy\_P} - T_{ext\_moy\_J}) + c$$

$$B_{chauffage\_P} = 0 \times (20 - 11)^2 + 6,28 \times (20 - 11) - 29,56 = 26,96 \, kWh$$

*(3.2) Estimation de la répartition horaire des besoins de chauffage journalier de la période P:*

Le profil horaire des besoins de chauffage est calculé à partir de l'équation :

$$B_{chauffage\_H\_P} = \frac{a \times (T_{int\_H\_P} - T_{ext\_H\_P})^2 + b \times (T_{int\_H\_P} - T_{ext\_H\_P}) + c}{24}$$

Pour la 1$^{ère}$ heure suivant l'heure actuelle, le besoin de chauffage est de :

$$B_{chauffage\_H1\_P} = \frac{0 \times (20 - 9)^2 + 6,28 \times (20 - 9) - 29,56}{24} = 1,65 \, kWh$$

Le tableau ci-dessous récapitule l'estimation du profil horaire des besoins de chauffage :

| Heure de la journée [h] | Ecart entre l'heure actuelle et l'heure de l'estimation [h] | Besoin de chauffage à l'heure h [kWh] |
|---|---|---|
| 7 | 1 | 1.65 |
| 8 | 2 | 1.39 |
| 9 | 3 | 1.12 |

(suite)

| Heure de la journée [h] | Ecart entre l'heure actuelle et l'heure de l'estimation [h] | Besoin de chauffage à l'heure h [kWh] |
|---|---|---|
| 10 | 4 | 0.85 |
| 11 | 5 | 0.60 |
| 12 | 6 | 0.38 |
| 13 | 7 | 0.22 |
| 14 | 8 | 0.11 |
| 15 | 9 | 0.08 |
| 16 | 10 | 0.11 |
| 17 | 11 | 0.22 |
| 18 | 12 | 0.38 |
| 19 | 13 | 0.60 |
| 20 | 14 | 0.85 |
| 21 | 15 | 1.12 |
| 22 | 16 | 1.39 |
| 23 | 17 | 1.65 |
| 24 | 18 | 1.86 |
| 1 | 19 | 2.03 |
| 2 | 20 | 2.13 |
| 3 | 21 | 2.17 |
| 4 | 22 | 2.13 |
| 5 | 23 | 2.03 |
| 6 | 24 | 1.86 |

Etape 4 :

*(4.1) Estimation de l'énergie utilisable disponible dans le système d'accumulation :*

Le système estime l'énergie utilisable disponible dans le ballon 4' de stockage. Pour ce faire 3 sondes de températures ont été installées aux hauteurs relatives suivantes: 1/6 du ballon ($T_{ballon1}$), ½ du ballon ($T_{ballon2}$) et 5/6 du ballon ($T_{ballon3}$).
Ces mesures de températures indiquent les valeurs suivantes :

- $T_{ba11on1}$ : 35°C
- $T_{ballon2}$ : 45°C
- $T_{ballon3}$ : 55°C

A partir de ces 3 mesures de températures, le système calcule l'énergie disponible dans le ballon à partir de l'équation suivante :

$$E_{stockage} = V_{ballon} \times C_p \times (\frac{T_{ballon1} + T_{ballon2} + T_{ballon3}}{3} - T_{bal\_min})$$

Le volume $V_{ballon}$ du ballon est de 1000 litres, la capacité calorifique $C_p$ de l'eau est de 4,18 kJ/kg/K (eau) et la température minimum du ballon $T_{bal\_min}$, qui correspond à la température minimum utilisable par le système de chauffage, est dans ce cas de 40°C (les émetteurs 15 sont des radiateurs). On a donc :

$$E_{stockage} = \frac{1000 \times 4,18 \times (\frac{35 + 45 + 55}{3} - 40)}{3600} = 5,81\,kWh$$

Etape 5 :

*(5.1) Estimation de l'autonomie de chauffage :*

Le système estime l'autonomie de chauffage à partir de l'énergie utilisable disponible dans le ballon de stockage et de la prévision des besoins de chauffage :

| Heure de la journée [H] | Ecart entre l'heure actuelle et l'heure de l'estimation [H-Ho] | Besoin en chauffage [kWh] à l'heure H | Energie restante dans le ballon de stockage [kWh] à l'heure Ho |
|---|---|---|---|
| 6 | 0 | - | 5.81 |
| 7 | 1 | 1.65 | 4.16 |
| 8 | 2 | 1.39 | 2.77 |
| 9 | 3 | 1.12 | 1.65 |
| 10 | 4 | 0.85 | 0.79 |
| 11 | 5 | 0.60 | 0.19 |
| 12 | 6 | 0.38 | -0.19 |
| 13 | 7 | 0.22 | -0.41 |
| 14 | 8 | 0.11 | -0.52 |
| 15 | 9 | 0.08 | -0.60 |
| 16 | 10 | 0.11 | -0.71 |
| 17 | 11 | 0.22 | -0.93 |
| 18 | 12 | 0.38 | -1.31 |
| 19 | 13 | 0.60 | -1.91 |
| 20 | 14 | 0.85 | -2.76 |
| 21 | 15 | 1.12 | -3.88 |
| 22 | 16 | 1.39 | -5.28 |
| 23 | 17 | 1.65 | -6.92 |
| 24 | 18 | 1.86 | -8.79 |
| 1 | 19 | 2.03 | -10.82 |
| 2 | 20 | 2.13 | -12.95 |
| 3 | 21 | 2.17 | -15.12 |
| 4 | 22 | 2.13 | -17.26 |
| 5 | 23 | 2.03 | -19.29 |
| 6 | 24 | 1.86 | -21.15 |

Dans ce cas, l'autonomie de chauffage est de 5h, inférieure à l'autonomie minimum souhaitée par l'utilisateur (8h). Le système va donc estimer l'énergie à charger dans la chaudière.

*(5.2) Estimation de la quantité d'énergie à charger dans la chaudière :*

Le système calcule les valeurs suivantes :

- énergie maximum stockable dans le ballon :

$$E_{stockage\_\max i} = V_{ballon} \times C_p \times (T_{bal\_\max} - T_{bal\_\min})$$

$$E_{stockage\_\max i} = \frac{1000 \times 4,18 \times (90 - 40)}{3600} = 58,06\,kWh$$

- énergie maximum chargeable dans la chaudière :

$$E_{chaudière\_\max i} = V_{foyer} \times \rho_{chaudière} \times PCI_{combustible}$$

$$E_{chaudière\_\max i} = \frac{50}{1000} \times 0,8 \times 1400 = 56\,kWh$$

Dans cette équation, PCI représente le pouvoir calorifique inférieur, (PCI = 140 kWh/m$^3$ pour le bois et $\rho$ = 0,8) ;
- énergie minimum chargeable dans la chaudière :

$$E_{chaudière\_\min i} = 0,5 \times E_{chaudière\_\max i}$$

$$E_{chaudière\_\min i} = 0,5 \times 56 = 28\,kWh$$

L'énergie à charger dans la chaudière est donc égale à :

$$E_{chaudière\_à\_ch\arg er} = E_{stockage\_\max i} - E_{stockage\_dispo} = 58,06 - 5,81 = 52,25\,kWh$$

Cette valeur est bien supérieure à l'énergie minimum chargeable dans la chaudière E$_{chaudière\_mini}$ et inférieure à l'énergie maximum chargeable dans la chaudière E$_{chaudière\_maxi}$.

Etape 6 :

Les informations suivantes sont transmises à l'utilisateur par un afficheur :

- Energie disponible dans le ballon :

$$Affichage\_E_{stockage} = \frac{E_{stockage}}{E_{stockage\_\max i}} = \frac{5,81}{58,06} = 10\%$$

L'énergie disponible correspond donc à 10 % du stock maximum.
- Autonomie de chauffage :

$$Affichage\_Autonomie = 5\,h$$

- Energie à charger dans la chaudière :

$$Affichage\_E_{chaudière\_à\_ch\arg er} = \frac{E_{chaudière\_à\_ch\arg er}}{E_{chaudière\_\max i}} = \frac{52,25}{56} = 93\%$$

L'utilisateur doit donc charger sa chaudière à 93% par rapport à une charge complète.

Exemple 2 : Ajustement de la signature énergétique du bâtiment et estimation de l'énergie à charger dans la chaudière :

Là encore, on considère une période P de 24 heures (qui ne commence pas nécessairement à 0h).
L'appareil d'aide au chargement est installé sur un système 4, 4' de chauffage constitué d'une chaudière 4 à bois de 25 kW avec un foyer de 50 1 et d'un ballon 4' de stockage en eau de 1000 1. L'utilisateur a réglé la consigne de la température ambiante à 20°C.
L'utilisateur a réglé le système avec les paramètres suivantes :

- Température consigne intérieure : 20°C constante,
- Volume du foyer de la chaudière 4: 50 litres,
- Volume du ballon 4' de stockage : 1000 litres.
- Type d'émetteurs : radiateurs ;
- Autonomie minimum souhaitée : 8h.

Les valeurs mesurées lors de la période P-1 sont :

- température maximale: 15°C ;
- température minimale: 5°C ;
- température intérieure moyenne journalière: 19, 8°C ;

Il est 0 h du matin, la température extérieure mesurée est alors de 6°C. La température mesurée à 22h, la veille, était de 9°C.
Les étapes 1-6 vont être maintenant appliquées.

Etape 1 :

*(1.1) Estimation de la température extérieure moyenne de la période P:*

La dernière estimation de la température extérieure moyenne pour la période P (les 24 prochaines heures dans l'exemple choisi) a été effectuée à 22h.

$$T_{ext\_moy\_P} = T_{ext\_mesurée\_22h} = 9°C$$

Les températures minimale et maximale sur la période P (les 24 prochaines heures dans l'exemple choisi) sont estimées :

$$T_{ext\_min\_P} = 2 \times T_{ext\_moy\_P} - T_{ext\_max\_P-1} = 2 \times 9 - 15 = 3°C$$

et

$$T_{ext\_max\_P} = T_{ext\_max\_P-1} = 15°C$$

Le système 6 estime ensuite le profil horaire de la température extérieure pour la période P.

*(1.2) Estimation de la température intérieure moyenne de la période P:*

La température intérieure de consigne est de 20°C constant sur la journée.

*(1.3) Estimation de la différence entre la température intérieure moyenne de la période P et la température extérieure de la période P :*

Le système 6 calcule ensuite la différence entre la température extérieure horaire et la température intérieure de consigne de la période P.

Les valeurs de ces températures sont détaillées dans le tableau ci-dessous :

| Heure de la journée [H] | Ecart entre l'heure actuelle et l'heure de l'estimation [H-Ho] | Température extérieure estimée a l'heure Ho [°C] | Température intérieure de consigne à l'heure H [°C] | Différence Température intérieure-température extérieure [°C] à l'heure H |
|---|---|---|---|---|
| 1 | 1 | 3.8 | 20 | 16.2 |
| 2 | 2 | 3.2 | 20 | 16.8 |
| 3 | 3 | 3.0 | 20 | 17.0 |
| 4 | 4 | 3.2 | 20 | 16.8 |
| 5 | 5 | 3.8 | 20 | 16.2 |
| 6 | 6 | 4.8 | 20 | 15.2 |
| 7 | 7 | 6.0 | 20 | 14.0 |
| 8 | 8 | 7.4 | 20 | 12.6 |
| 9 | 9 | 9.0 | 20 | 11.0 |
| 10 | 10 | 10.6 | 20 | 9.4 |
| 11 | 11 | 12.0 | 20 | 8.0 |
| 12 | 12 | 13.2 | 20 | 6.8 |
| 13 | 13 | 14.2 | 20 | 5.8 |
| 14 | 14 | 14.8 | 20 | 5.2 |
| 15 | 15 | 15.0 | 20 | 5.0 |
| 16 | 16 | 14.8 | 20 | 5.2 |
| 17 | 17 | 14.2 | 20 | 5.8 |
| 18 | 18 | 13.2 | 20 | 6.8 |

(suite)

| Heure de la journée [H] | Ecart entre l'heure actuelle et l'heure de l'estimation [H-Ho] | Température extérieure estimée a l'heure Ho [°C] | Température intérieure de consigne à l'heure H [°C] | Différence Température intérieure-température extérieure [°C] à l'heure H |
|---|---|---|---|---|
| 19 | 19 | 12.0 | 20 | 8.0 |
| 20 | 20 | 10.6 | 20 | 9.4 |
| 21 | 21 | 9.0 | 20 | 11.0 |
| 22 | 22 | 7.4 | 20 | 12.6 |
| 23 | 23 | 6.0 | 20 | 14.0 |
| 24 | 24 | 4.8 | 20 | 15.2 |

Etape 2 :

*(2.1) Définition de la signature énergétique :*

Les mesures des températures extérieures, températures intérieures et des besoins de chauffage des périodes précédentes (P-1, P-2..., etc) ont permis de déterminer la signature énergétique du bâtiment :

$$B_{chauffage} = a \times (T_{\text{int}} - T_{ext})^2 + b \times (T_{\text{int}} - T_{ext}) + c \quad [\text{kWh}]$$

Avec : a = 0 ; b = 6, 28 ; c = -29, 56

*(2.2) Ajustement des paramètres de la signature énergétique du bâtiment :*

La température intérieure moyenne mesurée pour la période précédente (les 24 dernières heures dans l'exemple choisi) est de 19,8°C.
La température extérieure moyenne mesurée pour la période précédente est de :

$$T_{ext\_moyP-1} = \frac{T_{ext\_\max\_P-1} + T_{ext\_\min\_P-1}}{2} = \frac{15+5}{2} = 10°C$$

De ce fait, la différence entre la température intérieure moyenne et la température extérieure moyenne de la période P-1 précédente est de :

$$T_{\text{int}\_moy\_P-1} - T_{ext\_moy\_P-1} = 19,8 - 10 = 9,8°C .$$

A partir de cette valeur et de la signature énergétique du bâtiment, le système estime le besoin de chauffage de la période P-1 précédente:

$$B_{chauffage\_estimé} = 0 \times (9,8)^2 + 6,28 \times (9,8) - 29,56 = 31,98 \quad [\text{kWh}] .$$

Le besoin réel du chauffage mesuré pour la période P-1 est de 33,2 kWh. Le besoin de chauffage estimé et le besoin de chauffage réel étant différents, le système va réajuster les paramètres de la signature énergétique à partir de l'algorithme expliqué ci-dessus.

Les paramètres de la signature énergétique du bâtiment sont alors réajustés à :

- a = 0
- b = 6, 30
- c = -29, 70

Le réajustement de ces paramètres peut avoir lieu par exemple toutes périodes P, par exemple toutes les 24 heures à une heure définie comme étant l'heure 0.

Etape 3 :

*(3.1) Estimation des besoins de chauffage journalier de la période P :*

Les besoins de chauffage sont estimés pour la prochaine période P à l'aide de la formule réajustée de la signature énergétique ; ils sont ici de :

$$B_{chauffage\_P} = a \times (T_{int\_moy\_P} - T_{ext\_moyP})^2 + b \times (T_{int\_moy\_P} - T_{ext\_moy\_P}) + c$$

$$B_{chauffage\_P} = 0 \times (20-9)^2 + 6,30 \times (20-9) - 29,70 = 39,6\,kWh$$

*(3.2) Estimation de la répartition horaire des besoins de chauffage journalier de la période P:*

Le profil horaire des besoins de chauffage est calculé à partir de l'équation suivante, obtenue à l'aide de la formule réajustée de la signature énergétique :

$$B_{chauffage\_H\_P} = \frac{a \times (T_{int\_H\_P} - T_{ext\_H\_P})^2 + b \times (T_{int\_H\_P} - T_{ext\_H\_P}) + c}{24}$$

Pour la 1ère heure suivant l'heure actuelle, le besoin de chauffage est de:

$$B_{chauffage\_H1\_P} = \frac{0 \times (20-3,8)^2 + 6,30 \times (20-3,8) - 29,70}{24} = 3,01\,kWh$$

Le tableau ci-dessous récapitule l'estimation du profil horaire des besoins de chauffage :

| Heure de la journée [H] | Ecart entre l'heure actuelle et l'heure de l'estimation [H-Ho] | Besoin de chauffage [kWh] à l'heure H |
|---|---|---|
| 1 | 1 | 3.01 |
| 2 | 2 | 3.17 |
| 3 | 3 | 3.23 |
| 4 | 4 | 3.17 |
| 5 | 5 | 3.01 |

(suite)

| Heure de la journée [H] | Ecart entre l'heure actuelle et l'heure de l'estimation [H-Ho] | Besoin de chauffage [kWh] à l'heure H |
|---|---|---|
| 6 | 6 | 2.76 |
| 7 | 7 | 2.44 |
| 8 | 8 | 2.06 |
| 9 | 9 | 1.65 |
| 10 | 10 | 1.24 |
| 11 | 11 | 0.86 |
| 12 | 12 | 0.54 |
| 13 | 13 | 0.29 |
| 14 | 14 | 0.13 |
| 15 | 15 | 0.08 |
| 16 | 16 | 0.13 |
| 17 | 17 | 0.29 |
| 18 | 18 | 0.54 |
| 19 | 19 | 0.86 |
| 20 | 20 | 1.24 |
| 21 | 21 | 1.65 |
| 22 | 22 | 2.06 |
| 23 | 23 | 2.44 |
| 24 | 24 | 2.76 |

Etape 4 :

*(4.1) Estimation de l'énergie utilisable disponible dans le système d'accumulation :*

Le système estime l'énergie utilisable disponible dans le ballon de stockage. Pour ce faire 3 sondes de températures ont été installées aux hauteurs relatives suivantes : 1/6 du ballon ($T_{ballon1}$), ½ du ballon ($T_{ballon2}$) et 5/6 du ballon ($T_{ballon3}$).
Ces mesures de températures indiquent les valeurs suivantes :

- $T_{ballon1}$ : 45°C
- $T_{ballon2}$ : 50°C
- $T_{ballon3}$ : 55°C

A partir de ces 3 mesures de températures, le système calcule l'énergie disponible dans le ballon à partir de l'équation suivante :

$$E_{stockage} = V_{ballon} \times C_p \times (\frac{T_{ballon1} + T_{ballon2} + T_{ballon3}}{3} - T_{bal\_min})$$

Le volume du ballon $V_{ballon}$ est de 1000 litres, la capacité calorifique $C_p$ de l'eau est de 4,18 kJ/kg/K (eau) et la température minimale du ballon $T_{bal\_min}$ qui correspond à la température minimale utilisable par le système de chauffage est dans ce cas de 40°C (les émetteurs 15 sont des radiateurs) :

$$E_{stockage} = \frac{1000 \times 4{,}18 \times (\frac{45 + 50 + 55}{3} - 40)}{3600} = 11{,}61\,kWh$$

Etape 5 :

*(5.1) Estimation de l'autonomie de chauffage :*

Le système 6 estime l'autonomie de chauffage à partir de l'énergie utilisable disponible dans le ballon de stockage et de la prévision des besoins de chauffage :

| Heure de la journée [H] | Ecart entre l'heure actuelle et l'heure de l'estimation [H-Ho] | Besoin chauffage [kWh] à l'heure H | Energie restante dans le ballon de stockage [kWh] à l'heure Ho |
|---|---|---|---|
| 0 | 0 | - | 11.61 |
| 1 | 1 | 3.01 | 8.60 |
| 2 | 2 | 3.17 | 5.42 |
| 3 | 3 | 3.23 | 2.20 |
| 4 | 4 | 3.17 | -0.97 |
| 5 | 5 | 3.01 | -3.99 |
| 6 | 6 | 2.76 | -6.75 |
| 7 | 7 | 2.44 | -9.19 |
| 8 | 8 | 2.06 | -11.24 |
| 9 | 9 | 1.65 | -12.89 |
| 10 | 10 | 1.24 | -14.14 |
| 11 | 11 | 0.86 | -15.00 |
| 12 | 12 | 0.54 | -15.54 |
| 13 | 13 | 0.29 | -15.82 |
| 14 | 14 | 0.13 | -15.95 |
| 15 | 15 | 0.08 | -16.03 |
| 16 | 16 | 0.13 | -16.15 |
| 17 | 17 | 0.29 | -16.44 |
| 18 | 18 | 0.54 | -16.98 |
| 19 | 19 | 0.86 | -17.84 |
| 20 | 20 | 1.24 | -19.08 |
| 21 | 21 | 1.65 | -20.73 |
| 22 | 22 | 2.06 | -22.79 |
| 23 | 23 | 2.44 | -25.23 |
| 24 | 24 | 2.76 | -27.99 |

Dans ce cas, l'autonomie de chauffage est de 3h, inférieure à l'autonomie minimum souhaitée par l'utilisateur (8h). Le système va donc estimer l'énergie à charger dans la chaudière.

*(5.2) Estimation de la quantité d'énergie à charger dans la chaudière :*

Le système calcule les valeurs suivantes :

-  énergie maximale stockable dans le ballon :

$$E_{stockage\_\max i} = V_{ballon} \times C_p \times (T_{bal\_\max} - T_{bal\_\min})$$

$$E_{stockage\_\max i} = \frac{1000 \times 4,18 \times (90 - 40)}{3600} = 58,06\, kWh$$

-  énergie maximale chargeable dans la chaudière :

$$E_{chaudière\_\max i} = V_{foyer} \times \rho_{chaudière} \times PCI_{combustible}$$

$$E_{chaudière\_\max i} = \frac{50}{1000} \times 0,8 \times 1400 = 56\, kWh$$

-  énergie minimale chargeable dans la chaudière :

$$E_{chaudière\_\min i} = 0,5 \times E_{chaudière\_\max i}$$

$$E_{chaudière\_\min i} = 0,5 \times 56 = 28\, kWh$$

L'énergie à charger dans la chaudière est égale à :

$$E_{chaudière\_à\_charger} = E_{stockage\_\max i} - E_{stockage\_dispo} = 58,06 - 11,61 = 46,45\, kWh$$

Cette valeur est bien supérieure à l'énergie minimale chargeable dans la chaudière et inférieure à l'énergie maximale chargeable dans la chaudière.

Etape 6 :

Les informations suivantes sont transmises à l'utilisateur par un afficheur 6':

-  Energie disponible dans le ballon :

$$Affichage\_E_{stockage} = \frac{E_{stockage}}{E_{stockage\_\max i}} = \frac{11,61}{58,06} = 20\%$$

L'énergie disponible correspond donc à 10 % du stock maximum.

- Autonomie de chauffage :

$$Affichage\_Autonomie = 3\,h$$

- Energie à charger dans la chaudière :

$$Affichage\_E_{chaudière\_à\_ch\arg er} = \frac{E_{chaudière\_à\_ch\arg er}}{E_{chaudière\_\max i}} = \frac{46,45}{56} = 83\%$$

L'utilisateur doit donc charger sa chaudière à 83 % par rapport à une charge complète.

Les deux exemples donnés ci-dessus peuvent être adaptés à toute période P de durée différente de 24 h.

A la suite d'une estimation conduite selon l'invention, un utilisateur peut charger sa chaudière de la quantité de combustible indiquée.

L'invention peut être installée sur toutes les installations de chauffage par chaudière à combustible solide, existantes ou à venir, par exemple couplées à un ballon tampon : le système installé sera alors un système indépendant. Pour les installations à venir ou en renouvellement, ce système peut également être intégré avec des moyens de régulation qui gèrent déjà les zones de chauffage : le système est alors combiné à la régulation de chauffage.

La mise en oeuvre d'un procédé et d'un dispositif selon l'invention est simple et ne nécessite aucune action de l'utilisateur hormis un paramétrage initial de données qui lui sont aisément connues.

Le système est auto-adaptatif et peut être installé sur toutes les installations de chauffage à combustible solide disposant d'un système d'accumulation, dans n'importe quelle région et n'importe quel bâtiment.

Les économies d'énergies primaires attendues, les réductions d'émissions de polluants varient entre 20 et 60 % par rapport à un utilisateur qui charge chaque jour identiquement sa chaudière à combustible solide.

**Revendications**

1. Procédé d'estimation de l'alimentation en combustible d'une chaudière d'un bâtiment (2) comportant, outre cette chaudière (4), et des moyens (4') d'accumulation d'énergie, afin d'assurer dans le bâtiment une température intérieure souhaitée pendant une période d'autonomie P, ce procédé comportant les étapes suivantes :

   a) réaliser une estimation de la température extérieure moyenne pendant la période d'autonomie P,
   b) déterminer la consommation du bâtiment (2) pour assurer ladite température intérieure souhaitée, en fonction de l'estimation précédente de la température extérieure moyenne,
   c) déterminer la quantité d'énergie à fournir en fonction de la consommation précédente, et la quantité de combustible nécessaire à la chaudière pour fournir cette énergie.

2. Procédé selon la revendication 1, dans lequel l'étape a) met en oeuvre une mesure d'une température extérieure instantanée et/ou réalisée au cours d'une période antérieure à la durée d'autonomie P.

3. Procédé selon la revendication 1 ou 2, dans lequel l'étape b) met en oeuvre une détermination d'une caractéristique du bâtiment (2), dite signature énergétique, qui représente la consommation du bâtiment en fonction de la différence entre une température intérieure $T_{int}$ et une température extérieure $T_{ext}$.

4. Procédé selon la revendication 3, dans lequel on compare, pour une période antérieure à la période P, le besoin de chauffage estimé et le besoin de chauffage réel et on corrige la signature énergétique en fonction du résultat de cette comparaison.

5. Procédé selon l'une des revendications 1 à 4, dans lequel, l'étape c) prend au moins en compte:

   - l'autonomie de chauffage au début de la période P,
   - la quantité maximale d'énergie stockable dans les moyens (4') d'accumulation,
   - la quantité minimale d'énergie chargeable dans la chaudière (4),

- et la quantité maximale d'énergie chargeable dans la chaudière (4).

6. Procédé selon la revendication 5, dans lequel la quantité d'énergie à charger est égale à la plus petite des deux quantités suivantes :

   - la différence entre l'énergie maximale stockable dans les moyens d'accumulation et l'énergie disponible dans les moyens d'accumulation ;
   - l'énergie maximale chargeable dans la chaudière,

   et ce tout en étant supérieure à l'énergie minimale chargeable dans la chaudière.

7. Procédé selon l'une des revendications précédentes, dans lequel on réalise en outre une estimation d'au moins une température extérieure instantanée pendant la période d'autonomie P, et on estime une répartition horaire des besoins de chauffage pendant cette période P.

8. Dispositif d'estimation de l'alimentation en combustible d'une chaudière possédant des moyens(4) d'accumulation (4'), pour un bâtiment (2), comportant :

   a) des moyens (6, 12) pour déterminer la consommation du bâtiment (2) pour assurer une température intérieure souhaitée pendant une période d'autonomie P, à partir d'une estimation d'une température extérieure moyenne pendant la période d'autonomie P,
   b) des moyens (6) pour déterminer la quantité d'énergie à fournir en fonction de la consommation précédente, et la quantité de combustible nécessaire à la chaudière pour fournir cette énergie.

9. Système de chauffage d'un bâtiment (2), comportant :

   - une chaudière (4) pour effectuer la combustion d'un combustible, et des moyens (4') d'accumulation d'énergie,
   - un dispositif, selon la revendication précédente, d'estimation de l'alimentation en combustible de la chaudière.

10. Système de chauffage selon la revendication précédente, comportant en outre des moyens (8, 10) pour mesurer au moins une température extérieure au bâtiment et au moins une température intérieure.

11. Système selon la revendication 9 ou 10, comportant en outre des moyens de mesure de la quantité d'énergie disponible dans les moyens d'accumulation.

12. Bâtiment, possédant un système de chauffage selon la revendication 10 ou 11 et des moyens (15) de chauffage.

FIG.1

S1

S2

S3

2

6'    6

8    10

4

4'

5

12

15

FIG.3

Text           Tint_cons            Text    Tint    Echauffage

**Etape 1**
Estimation de (Tint-Text) du jour J

**Etape 2**
Apprentissage de la signature énergétique du bâtiment

Eballon
(3 Tbal ou autres)

**Etape 4**
Estimation de l'énergie dans le ballon de stockage

**Etape 3**
Détermination des besoins de chauffage du jour J

**Etape 5**

Comparaison + Analyse

**Etape 6**

Energie dans le ballon

Energie à charger dans la chaudière

Autonomie

6'

**FIG.2**

Europäisches
Patentamt

European
Patent Office

Office européen
des brevets

**RAPPORT DE RECHERCHE EUROPEENNE**

Numéro de la demande

EP 09 16 5319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/046387 A1 (GOPAL RAJEEV [US] ET AL) 21 février 2008 (2008-02-21) * le document en entier * ----- | 1-12 | INV. G06Q10/00 |
| X | US 2007/010914 A1 (JOHNSON DANIEL T [US] ET AL) 11 janvier 2007 (2007-01-11) * le document en entier * ----- | 1-12 | |

| | DOMAINES TECHNIQUES RECHERCHES (IPC) |
|---|---|
| | G06Q |

Le présent rapport a été établi pour toutes les revendications

| Lieu de la recherche | Date d'achèvement de la recherche | Examinateur |
|---|---|---|
| Munich | 29 juillet 2009 | Closa, Daniel |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 16 5319

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-07-2009

| Document brevet cité au rapport de recherche | Date de publication | Membre(s) de la famille de brevet(s) | Date de publication |
|---|---|---|---|
| US 2008046387 A1 | 21-02-2008 | AUCUN | |
| US 2007010914 A1 | 11-01-2007 | AUCUN | |

EPO FORM P0460

Pour tout renseignement concernant cette annexe : voir Journal Officiel de l'Office européen des brevets, No.12/82